# FASCICULE DE BREVET EUROPEEN

(11) **EP 2 183 630 B1**
(45) Date de publication et mention de la délivrance du brevet: **27.07.2016**
(21) Numéro de dépôt: 08846701.4
(22) Date de dépôt: 02.09.2008
(51) Int. Cl.: G02B 6/44

(54) **DISPOSITIF DE RACCORDEMENT D'EXTREMITES DE TUBES DE GUIDAGE ET DE PROTECTION D'UN CABLE**
VORRICHTUNG ZUR VERBINDUNG DER ENDEN VON KABELFÜHRUNGEN UND SCHUTZRÖHREN
DEVICE FOR CONNECTING THE ENDS OF CABLE GUIDANCE AND PROTECTION TUBES

(30) Priorité: 07.09.2007 FR 0706264
(43) Date de publication de la demande: 12.05.2010
(73) Titulaire: PARKER HANNIFIN MANUFACTURING France SAS, 74100 Ville-la-Grand (FR)
(72) Inventeur: LE QUERE, Philippe, F-35830 BETTON (FR)
(74) Mandataire: Lavialle, Bruno François Stéphane
(86) Numéro de dépôt international: PCT/FR2008/001220
(87) Numéro de publication internationale: WO 2009/060148

(56) Documents cités:
- EP-A- 0 363 188
- EP-A- 0 618 655
- EP-A- 1 818 702
- GB-A- 2 294 306
- US-A- 4 002 345
- US-A- 4 548 427
- US-A- 5 933 556

## Description

La présente invention concerne un dispositif de raccordement d'extrémités de tubes de guidage et de protection d'un câble et plus particulièrement d'un câble à fibres optiques.

### ARRIERE-PLAN DE L'INVENTION

Les câbles à fibres optiques remplacent de plus en plus les conducteurs en cuivre pour la transmission de données. Toutefois, les câbles à fibres optiques doivent être manipulés précautionneusement en raison de la fragilité des fibres optiques, ce qui rend leur installation relativement longue et coûteuse et obligerait en théorie à vérifier l'intégrité de chacune de celles-ci après l'installation.

Il existe un procédé pneumatique qui simplifie grandement l'installation des câbles à fibres optiques en limitant le risque d'une détérioration de ceux-ci. Ce procédé consiste à faire passer des tubes raccordés les uns aux autres le long du cheminement prévu du câble à fibres optiques. Une fois les tubes installés, une extrémité du câble équipée d'une jupe de section légèrement inférieure à la section de passage des tubes est engagée à une extrémité de l'assemblage de tubes et de l'air sous pression est introduit derrière la jupe pour pousser celle-ci le long des tubes. Les tubes assurent donc le guidage du câble et sont laissés une fois le câble en place pour protéger celui-ci.

La plupart du temps, des dispositifs de raccordement sont utilisés pour relier les tubes deux à deux. Chaque dispositif de raccordement doit permettre un assujettissement étanche des tubes de manière que l'air introduit dans les tubes puisse atteindre une pression suffisante pour pousser l'extrémité de câble sur toute la longueur des tubes. Les dispositifs de raccordement comprennent en outre un organe d'étanchéité destiné à enserrer de façon étanche le câble une fois ce dernier en place pour isoler le câble de l'atmosphère extérieure et limiter le risque de formation de condensation et d'accumulation d'eau dans les tubes. L'organe d'étanchéité ne doit cependant pas entraver le cheminement du câble lors de sa mise en place. Pour cette raison, le dispositif de raccordement est généralement agencé de telle manière que l'organe d'étanchéité soit escamoté lors de la mise en place du câble puis amené en saillie entre les tubes pour prendre contact avec la surface extérieure du câble en place. Dans les dispositifs de raccordement actuels, le passage de l'organe d'étanchéité de son état escamoté à son état en saillie est obtenu par une compression axiale de l'organe d'étanchéité. Les efforts à mettre en oeuvre sont importants et la manipulation du dispositif de raccordement s'avère pour cette raison peu pratique.

### OBJET DE L'INVENTION

Un but de l'invention est un dispositif de raccordement du type précité qui soit plus facile d'utilisation.

### DEFINITION GENERALE DE L'INVENTION

A cet effet, on prévoit un dispositif de raccordement d'extrémités de tubes de guidage et de protection d'un câble, comportant des première et deuxième parties de corps tubulaires, coaxiales et juxtaposées comprenant chacune une première extrémité de liaison à une des extrémités de tube et une deuxième extrémité qui est associée à un moyen de liaison des parties de corps et qui reçoit un organe d'étanchéité tubulaire souple s'étendant à cheval de façon coaxiale dans les deuxièmes extrémités des parties de corps, le moyen de liaison étant agencé de telle manière que les parties de corps soient mobiles l'une par rapport à l'autre entre une première position dans laquelle les parties de corps sont rapprochées et l'organe d'étanchéité est dans un état de repos, et une deuxième position dans laquelle les moyens de liaison maintiennent les parties de corps écartées et les parties de corps ont des surfaces de contact avec l'organe d'étanchéité qui coopèrent avec l'organe d'étanchéité pour amener celui-ci dans un état déformé radialement vers l'intérieur, l'organe d'étanchéité ayant dans l'état déformé un diamètre intérieur au plus égal à un diamètre extérieur du câble.

Il s'avère que la déformation radiale de l'organe d'étanchéité peut être obtenue de façon plus aisée par un écartement des parties de corps.

Selon un mode de réalisation particulier des parties de corps, un logement d'entrée est ouvert sur la première extrémité pour recevoir l'extrémité de tube correspondante et pourvu de moyens de retenue étanche de l'extrémité de tube dans le logement et, de préférence, les moyens de retenue étanche comprennent un joint, annulaire et radialement compressible, qui est reçu dans le logement et qui a au repos un diamètre interne inférieur à un diamètre extérieur de l'extrémité de tube.

La connexion des tubes au dispositif de raccordement peut être réalisée simplement et relativement sans effort.

Avantageusement alors, l'organe d'étanchéité au repos a un diamètre intérieur sensiblement égal à un diamètre intérieur des tubes.

Le dispositif de raccordement a alors une surface intérieure sensiblement continue ne présentant pas, entre les extrémités de tubes, de décrochement qui risquerait d'accrocher l'extrémité de câble lors de son passage dans le dispositif de raccordement.

Selon un mode de réalisation particulier des surfaces de contact et de l'organe d'étanchéité, la surface de contact de la première partie du corps est un épaulement coopérant avec une collerette externe d'une première extrémité de l'organe d'étanchéité pour solidariser axialement la première partie de corps et l'organe d'étanchéité, et la surface de contact de la deuxième partie de corps a une forme se rétrécissant vers la première partie de corps et l'organe d'étanchéité a une deuxième extrémité ayant une surface externe de forme évasée coopérant par glissement avec la surface de contact de la deuxième partie de corps lorsque les parties de corps sont amenées de leur première position vers leur deuxième position.

Le glissement de la surface extérieure évasée de la deuxième extrémité de l'organe d'étanchéité sur la surface de contact de la deuxième partie de corps provoque un rétrécissement de la section de passage délimitée par la deuxième extrémité de l'organe d'étanchéité. La forme de la surface de contact de la deuxième partie de corps permet d'exercer sur l'organe d'étanchéité un effort ayant une composante transversale à partir de l'effort d'écartement des parties de corps qui est purement axial. Cette forme de la surface de contact de la deuxième partie de corps permet en outre de limiter les frottements entre l'organe d'étanchéité et la deuxième partie de corps lors de l'écartement des parties de corps.

De préférence alors, la surface externe évasée de la deuxième extrémité de l'organe d'étanchéité se prolonge par une collerette externe et avantageusement la collerette externe de la deuxième extrémité de l'organe d'étanchéité délimite une forme intérieure en cornet.

Cette forme permet d'avoir une mise en contact étroit de l'organe d'étanchéité avec le câble.

Selon un premier mode de réalisation des moyens de liaison, les deuxièmes extrémités des parties de corps sont engagées dans des extrémités opposées d'un manchon formant le moyen de liaison, le manchon coopérant par une liaison vis / écrou avec la deuxième extrémité d'au moins une des parties de corps et, de préférence, le manchon coopérant par une liaison pivot avec la deuxième extrémité de l'autre partie de corps.

Le manchon permet d'écarter progressivement les parties de corps en limitant l'effort à fournir pour l'écartement.

Selon un deuxième mode de réalisation des moyens de liaison, dans lequel la deuxième extrémité de la deuxième partie de corps et la deuxième extrémité de la première partie de corps sont pourvues extérieurement de reliefs de forme réciproque décalés axialement pour permettre deux positions axiales d'encliquetage.

Ceci permet d'avoir des moyens de liaison en une seule pièce avec l'une et/ou l'autre des parties de corps.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue en coupe longitudinale d'un dispositif de raccordement conforme à un premier mode de réalisation de l'invention,
- la figure 2 est une vue en coupe longitudinale d'un dispositif de raccordement conforme à un deuxième mode de réalisation de l'invention.

### DESCRIPTION DETAILLEE DE MODES DE REALISATION PREFERES

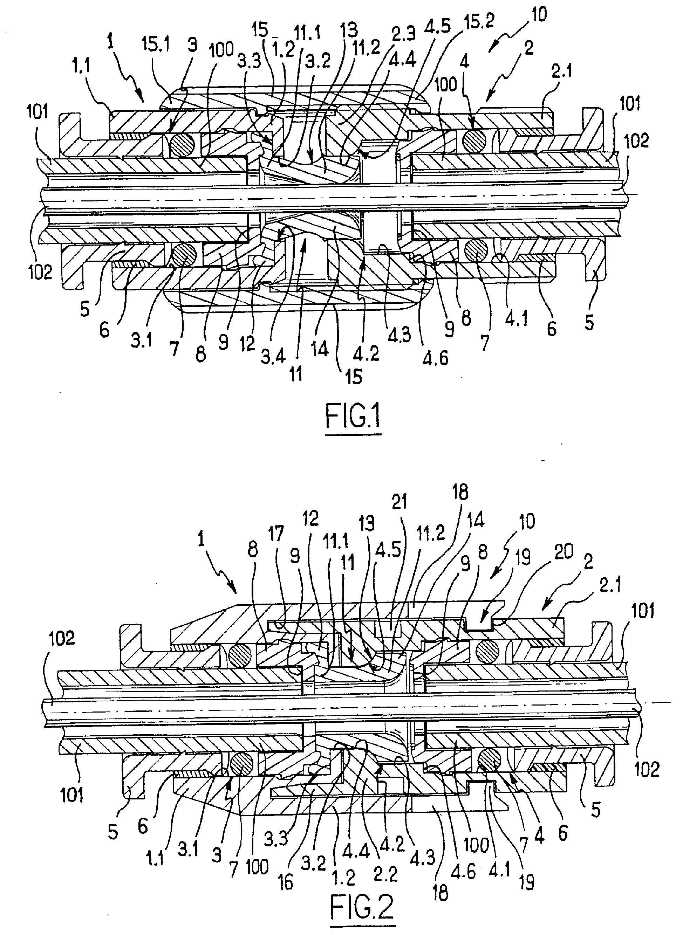

En référence aux figures 1 et 2, l'invention est ici décrite en application au raccordement de deux extrémités 100 de tubes 101 assurant le guidage et la protection d'un câble 102 à fibres optiques.

Le dispositif de raccordement, généralement désigné en 10, comprend une première partie de corps 1 et une deuxième partie de corps 2 ayant respectivement une première extrémité 1.1, 2.1 et, à l'opposé, une deuxième extrémité 1.2, 2.2.

Chaque partie de corps 1, 2 est de forme tubulaire et délimite un canal 3, 4 débouchant sur la première extrémité 1.1, 2.1 par un tronçon 3.1, 4.1 d'entrée de l'extrémité 100 de tube 101 et sur la deuxième extrémité 1.2, 2.2 par un tronçon 3.2, 4.2 de passage du câble 102. Le tronçon 3.1, 4.1 se raccorde au tronçon 3.2, 4.2 par un épaulement radial 3.3, 4.6.

Chaque tronçon 3.1, 4.1 reçoit des moyens de retenue étanche de l'extrémité 100 du tube 101. Les moyens de retenue étanche sont connus en eux-mêmes et comprennent ici une pince 5 s'étendant dans un insert 6 maintenant la pince 5 dans le tronçon 3.1, 4.1 et un joint d'étanchéité 7 annulaire disposé entre la pince 5 et une douille 8 de guidage terminal de l'extrémité 100 du tube 101. Le joint d'étanchéité 7 a un diamètre interne légèrement inférieur au diamètre externe du tube 101. La douille 8 possède un épaulement interne 9 formant une butée à l'enfoncement de l'extrémité 100 du tube 101 dans la partie de corps 1, 2. L'insert 6 et la douille 8 sont engagés à force ou encliquetés (ou clipsés) dans le tronçon 3.1, 4.1.

Le tronçon 3.2 a une section de passage définie par une surface cylindrique 3.4.

Le tronçon 4.2 comprend une portion 4.3 voisine du tronçon 4.1 délimitée par une surface cylindrique de diamètre inférieur à celui du tronçon 4.1 et une portion 4.4 voisine de la première partie de corps 1 délimitée par une surface ayant un contour en arc de cercle à convexité tournée vers la portion 4.3 et se rétrécissant vers la première partie de corps 1.

Un organe d'étanchéité 11, tubulaire, souple, s'étend à cheval de façon coaxiale dans les deuxièmes extrémités 1.2, 2.2 des parties de corps 1, 2. L'organe d'étanchéité 11 possède une portion d'extrémité 11.1 reçue dans la partie de corps 1 et une portion d'extrémité 11.2 reçue dans la partie de corps 2 en s'étendant respectivement dans les tronçons 3.2, 4.2, la portion d'extrémité 11.1 faisant saillie dans le tronçon 3.1. La portion d'extrémité 11.1 est pourvue extérieurement d'une collerette 12 pincée entre la douille 8 et l'épaulement radial 3.3 qui forme ainsi une surface de contact de la première partie de corps 1 avec l'organe d'étanchéité 11. La portion d'extrémité 11.2 est logée dans le tronçon 4.2 et a une surface externe 13 de forme évasée qui est prolongée par une collerette 14 qui délimite une forme intérieure en cornet. La surface externe 13 coopère par glissement avec la surface ayant un contour en arc de cercle formant une surface de contact 4.5 de la deuxième partie de corps 2 avec l'organe d'étanchéité 11.

En référence à la figure 1, les deux parties de corps 1, 2 sont réunies par un manchon 15 ayant des extrémités 15.1, 15.2 dans lesquelles sont engagées les deuxièmes extrémités 1.2, 2.2 des parties de corps 1.2. L'extrémité 15.1 définit une liaison pivot avec la deuxième extrémité 1.2 et l'extrémité 15.2 définit une liaison vis / écrou avec la deuxième extrémité 2.2.

En référence à la figure 2, la deuxième extrémité 2.2 de la deuxième partie de corps 2 est prolongée par une fourrure 16 engagée à coulissement dans une gorge cylindrique 17 de la deuxième extrémité 1.2 de la première partie de corps 1. La première extrémité 1.2 de la première partie de corps 1 est prolongée axialement par deux lames 18, élastiquement déformables et symétriques par rapport à l'axe longitudinal du dispositif de raccordement, ayant une extrémité libre pourvue d'un ergot 19 et la deuxième extrémité 2.2 de la deuxième partie de corps 2 est pourvue extérieurement de renfoncements 20, 21 décalés axialement pour permettre deux positions axiales d'encliquetage des ergots 19.

Le fonctionnement du dispositif de raccordement va maintenant être décrit.

Le raccordement des extrémités de tubes est effectué de manière classique.

Les parties de corps 1, 2 étant en position rapprochée (visible sur la figure 2 représentant le deuxième mode de réalisation, la position de l'organe d'étanchéité étant identique dans le premier mode de réalisation), l'organe d'étanchéité 11 est dans un état de repos dans lequel sa surface intérieure est sensiblement cylindrique de diamètre intérieur sensiblement égal à un diamètre intérieur des tubes. La collerette 14 est reçue dans la portion 4.3 du tronçon 4.2.

Le câble 102 est soufflé dans les tubes, la surface intérieure de l'organe d'étanchéité 11 guidant l'extrémité du câble 102 d'un tube vers l'autre.

Une fois le câble 102 en place dans les tubes 101, les parties de corps 1, 2 sont amenées dans leur position écartée (représentée la figure 1 représentant le premier mode de réalisation, la position de l'organe d'étanchéité étant identique dans le deuxième mode de réalisation) par dévissage du manchon 15 (premier mode de réalisation) ou par encliquetage des ergots 19 dans les renfoncements 21 (deuxième mode de réalisation). La surface externe 13 glisse sur la surface de contact 4.5 qui amène l'organe d'étanchéité 11 dans un état déformé radialement vers l'intérieur, l'organe d'étanchéité 11 ayant dans l'état déformé un diamètre intérieur au plus égal à un diamètre extérieur du câble 102. Lorsque les parties de corps sont dans leur position écartée, la collerette 14 est sur la portion de plus faible diamètre de la surface de contact 4.5 de sorte que sa surface interne en cornet est fortement appliquée contre le câble 102.

Bien entendu, l'invention n'est pas limité aux modes de réalisation décrits mais englobe toute variante entrant dans le cadre de l'invention telle que définie dans les revendications.

Les moyens de liaison peuvent avoir une structure différente de celle décrite et comprendre par exemple un manchon aux extrémités taraudées avec un pas inversé pour recevoir les deuxièmes extrémités filetées des parties de corps ou des crans ménagés sur la deuxième extrémité d'une des parties de corps engagée dans la deuxième extrémité de l'autre partie de corps.

Les extrémités de l'organe d'étanchéité et les surfaces de contact des parties de corps peuvent être identiques à l'extrémité 11.2 et à la surface de contact 4.5 décrites ci-dessus.

Les moyens de retenue étanche peuvent comprendre une rondelle d'accrochage dentée élastiquement déformable.

## Revendications

1. Dispositif de raccordement d'extrémités (100) de tubes (101) de guidage et de protection d'un câble (102), comportant des première et deuxième parties de corps (1, 2) tubulaires, coaxiales et juxtaposées comprenant chacune une première extrémité (1.1, 2.1) de liaison à une des extrémités de tube et une deuxième extrémité qui (1.2, 2.2) est associée à un moyen de liaison (15 ; 18, 19, 20, 21) des parties de corps et qui reçoit un organe d'étanchéité (11) tubulaire souple s'étendant à cheval de façon coaxiale dans les deuxièmes extrémités des parties de corps, le moyen de liaison étant agencé de telle manière que les parties de corps soient mobiles l'une par rapport à l'autre entre une première position dans laquelle les parties de corps sont rapprochées et l'organe d'étanchéité est dans un état de repos, et une deuxième position dans laquelle les moyens de liaison maintiennent les parties de corps écartées et les parties de corps ont des surfaces de contact (3.3, 4.5) avec l'organe d'étanchéité qui coopèrent avec l'organe d'étanchéité pour amener celui-ci dans un état déformé radialement vers l'intérieur, l'organe d'étanchéité ayant dans l'état déformé un diamètre intérieur au plus égal à un diamètre extérieur du câble.

2. Dispositif selon la revendication 1, dans lequel chaque partie de corps (1, 2) comprend un logement (3, 4) d'entrée ouvert sur la première extrémité (1.1, 2.1) pour recevoir l'extrémité de tube correspondante et pourvu de moyens de retenue étanche (5, 6, 7, 8) de l'extrémité de tube dans le logement.

3. Dispositif selon la revendication 2, dans lequel les moyens de retenue étanche comprennent un joint (7), annulaire et radialement compressible, qui est reçu dans le logement (3, 4) et qui a au repos un diamètre interne inférieur à un diamètre extérieur de l'extrémité de tube.

4. Dispositif selon la revendication 1, dans lequel l'organe d'étanchéité (11) au repos a un diamètre intérieur sensiblement égal à un diamètre intérieur des tubes.

5. Dispositif selon la revendication 1, dans lequel la surface de contact (3.3) de la première partie de corps (1) est un épaulement coopérant avec une collerette externe (12) d'une première extrémité (11.1) de l'organe d'étanchéité (11) pour solidariser axialement la première partie de corps et l'organe d'étanchéité, et la surface de contact (4.5) de la deuxième partie de corps (2) a une forme se rétrécissant vers la première partie de corps et l'organe d'étanchéité a une deuxième extrémité (11.2) ayant une surface externe (13) de forme évasée coopérant par glissement avec la surface de contact de la deuxième partie de corps lorsque les parties de corps sont amenées de leur première position vers leur deuxième position.

6. Dispositif selon la revendication 5, dans lequel la collerette externe (12) de la première extrémité (11.1) de l'organe d'étanchéité (11) est pincée entre l'épaulement (3.3) et une douille (8) rapportée dans le logement (3, 4) pour constituer une butée à l'enfoncement du tube dans la première partie de corps.

7. Dispositif selon la revendication 5, dans lequel la surface externe évasée (13) de la deuxième extrémité (11.2) de l'organe d'étanchéité (11) se prolonge par une collerette externe (14).

8. Dispositif selon la revendication 7, dans lequel la collerette externe (14) de la deuxième extrémité (11.2) de l'organe d'étanchéité (11) délimite une forme intérieure en cornet.

9. Dispositif selon la revendication 1, dans lequel les deuxièmes extrémités (1.2, 2.1) des parties de corps (1, 2) sont engagées dans des extrémités opposées d'un manchon (18) formant le moyen de liaison, le manchon coopérant par une liaison vis / écrou avec la deuxième extrémité (1.2) d'au moins une des parties de corps (1).

10. Dispositif selon la revendication 9, dans lequel le manchon (15) coopère par une liaison pivot avec la deuxième extrémité (2.2) de l'autre partie de corps (2).

11. Dispositif selon la revendication 1, dans lequel la deuxième extrémité (2.2) de la deuxième partie de corps (2) et la deuxième extrémité (1.2) de la première partie de corps (1) sont pourvues extérieurement de reliefs de forme réciproque (19, 20, 21) décalés axialement pour permettre deux positions axiales d'encliquetage.

## Patentansprüche

1. Vorrichtung zur Verbindung von Enden (100) von Rohren (101) zur Führung und zum Schutz eines Kabels (102), umfassend einen ersten und einen zweiten rohrförmigen Gehäuseteil (1, 2), die zueinander koaxial und nebeneinander angeordnet sind und jeweils ein erstes Ende (1.1, 2.1) zur Verbindung mit einem der Rohrenden und ein zweites Ende (1.2, 2.2) umfassen, das mit einem Verbindungsmittel (15; 18, 19, 20, 21) zum Verbinden der Gehäuseteile verbunden ist und das ein flexibles rohrförmiges Dichtungselement (11) aufnimmt, das sich in den zweiten Enden der Gehäuseteile auf koaxiale Weise aufsitzend erstreckt, wobei das Verbindungsmittel so ausgebildet ist, dass die Gehäuseteile zueinander zwischen einer ersten Position, in der die Gehäuseteile einander angenähert sind und das Dichtungselement in einem Ruhezustand ist, und einer zweiten Position beweglich sind, in der die Verbindungsmittel die Gehäuseteile beabstandet halten und die Gehäuseteile Kontaktflächen (3.3, 4.5) zum Kontakt mit dem Dichtungselement haben, die mit dem Dichtungselement zusammenwirken, um dieses in einen radial nach innen verformten Zustand zu bringen, wobei das Dichtungselement in dem verformten Zustand einen Innendurchmesser von höchstens gleich einem Außendurchmesser des Kabels hat.

2. Vorrichtung nach Anspruch 1, wobei jeder Gehäuseteil (1, 2) eine Aufnahme (3, 4) mit offenem Einlass an dem ersten Ende (1.1, 2.1) hat, um das entsprechende Rohrende aufzunehmen, die mit dichten Rückhaltemitteln (5, 6, 7, 8) versehen ist, um das Rohrende in der Aufnahme auf dichte Weise zurückzuhalten.

3. Vorrichtung nach Anspruch 2, wobei die dichten Rückhaltemittel eine ringförmige und radial komprimierbare Dichtung (7) umfassen, die in der Aufnahme (3, 4) aufgenommen ist und im Ruhezustand einen Innendurchmesser hat, der kleiner als ein Außendurchmesser des Rohrendes ist.

4. Vorrichtung nach Anspruch 1, wobei das Dichtungselement (11) im Ruhezustand einen Innendurchmesser hat, der im Wesentlichen gleich einem Innendurchmesser der Rohre ist.

5. Vorrichtung nach Anspruch 1, wobei die Kontaktfläche (3.3) des ersten Gehäuseteils (1) eine Schulter ist, die mit einem äußeren Kragen (12) eines ersten Endes (11.1) des Dichtungselements (11) zusammenwirkt, um den ersten Gehäuseteil und das Dichtungselement axial zu verbinden, und die Kontaktfläche (4.5) des zweiten Gehäuseteils (2) eine Form hat, die zum ersten Gehäuseteil hin kleiner wird, und das Dichtungselement ein zweites Ende (11.2) hat, das eine Außenfläche (13) mit aufgeweiteter Form hat, die durch Gleiten mit der Kontaktfläche des zweiten Gehäuseteils zusammenwirkt, wenn die Gehäuseteile von ihrer ersten Position in ihre zweite Position gebracht sind.

6. Vorrichtung nach Anspruch 5, wobei der äußere Kragen (12) des ersten Endes (11.1) des Dichtungselements (11) zwischen der Schulter (3.3) und einer in die Aufnahme (3, 4) eingebrachten Hülse (8) eingeklemmt ist, um einen Anschlag entgegen dem Eindrücken des Rohres in den ersten Gehäuseteil zu bilden.

7. Vorrichtung nach Anspruch 5, wobei sich die aufgeweitete Außenfläche (13) des zweiten Endes (11.2) des Dichtungselements (11) durch einen äußeren Kragen (14) fortsetzt.

8. Vorrichtung nach Anspruch 7, wobei der äußere Kragen (14) des zweiten Endes (11.2) des Dichtungselements (11) eine innere Form einer Spitztüte begrenzt.

9. Vorrichtung nach Anspruch 1, wobei die zweiten Enden (1.2, 2.1) der Gehäuseteile (1, 2) in entgegengesetzte Enden einer Muffe (18) eingefügt sind, die das Verbindungsmittel bildet, wobei die Muffe durch eine Verbindung aus Schraube/Mutter mit dem zweiten Ende (1.2) mindestens eines der Gehäuseteile (1) zusammenwirkt.

10. Vorrichtung nach Anspruch 9, wobei die Hülse (15) über eine Drehverbindung mit dem zweiten Ende (2.2) des anderen Gehäuseteils (2) zusammenwirkt.

11. Vorrichtung nach Anspruch 1, wobei das zweite Ende (2.2) des zweiten Gehäuseteils (2) und das zweite Ende (1.2) des ersten Gehäuseteils (1) außen mit Reliefelementen (19, 20, 21) reziproker Form versehen sind, die axial versetzt sind, um zwei axiale Einrastpositionen zu ermöglichen.

## Claims

1. A device for coupling together the ends (100) of tubes (101) for guiding and protecting a cable (102), the device comprising first and second tubular body portions (1, 2) juxtaposed in axial alignment, each having a first end (1.1, 2.1) for connection to one of the tube ends and a second end (1.2, 2.2) that is associated with connection means (15; 18, 19, 20, 21) for connecting together the body portions and that receives a flexible tubular sealing member (11) extending along the axis between the second ends of the body portions, the connection means being arranged in such a manner that the body portions are movable relative to each other between a first position in which the body portions are close together and the sealing member is in a rest state, and a second position in which the connection means hold the body portions spaced apart and the body portions have contact surfaces (3.3, 4.5) making contact with the sealing member and co-operating with the sealing member to bring it into a state in which it is deformed radially inwards, the sealing member in the deformed state having an inside diameter that is no greater than the outside diameter of the cable.

2. A device according to claim 1, wherein each body portion (1, 2) includes an inlet housing (3, 4) open to the first end (1.1, 2.1) to receive the corresponding tube end and provided with leaktight retaining means (5, 6, 7, 8) for retaining the tube end in the housing.

3. A device according to claim 2, wherein the leaktight retaining means comprise a radially-compressible annular sealing ring (7) that is received in the housing (3, 4) and that presents an inside diameter at rest that is smaller than an outside diameter of the tube end.

4. A device according to claim 1, wherein the sealing member (11) at rest has an inside diameter substantially equal to an inside diameter of the tubes.

5. A device according to claim 1, wherein the contact surface (3.3) of the first body portion (1) is a shoulder co-operating with an outer collar (12) of a first end (11.1) of the sealing member (11) to secure the first body portion axially with the sealing member, and the contact surface (4.5) of the second body portion (2) presents a shape that tapers towards the first body portion, and the sealing member has a second end (11.2) with an outside surface (13) of flared shape slidably co-operating with the contact surface of the second body portion when the body portions are taken from their first position towards their second position.

6. A device according to claim 5, wherein the outer collar (12) of the first end (11.1) of the sealing member (11) is clamped between the shoulder (3.3) and a bushing (8) fitted in the housing (3, 4) in order to constitute an abutment against the tube being pushed into the first body portion.

7. A device according to claim 5, wherein the flared outer surface (13) of the second end (11.2) of the sealing member (11) is extended by an outer collar (14).

8. A device according to claim 7, wherein the outer collar (14) of the second end (11.2) of the sealing member (11) defines an internal horn shape.

9. A device according to claim 1, wherein the second ends (1.2, 2.2) of the body portions (1, 2) are engaged in opposite ends of a sleeve (18) forming the connection means, the sleeve co-operating via a screw-and-nut connection with the second end (1.2) of at least one of the body portions (1).

10. A device according to claim 9, wherein the sleeve (15) co-operates via a pivot connection with the second end (2.2) of the other body portion (2).

11. A device according to claim 1, wherein the second end (2.2) of the second body portion (2) and the second end (1.2) of the first body portion (1) are provided externally with portions in relief of complementary shape (19, 20, 21) that are axially offset so as to enable snap-fastening in two axial positions.
